# FASCICULE DE BREVET EUROPEEN

(11) **EP 4 071 400 B1**
(45) Date de publication et mention de la délivrance du brevet: **06.08.2025**
(21) Numéro de dépôt: 22165440.3
(22) Date de dépôt: 30.03.2022
(51) Int. Cl.: F17C 13/02

(54) **RÉCIPIENT DE FLUIDE SOUS PRESSION AVEC DISPOSITIF ÉLECTRONIQUE DE CALCUL D'AUTONOMIE**
DRUCKBEHÄLTER FÜR FLUIDE MIT ELEKTRONISCHER VORRICHTUNG ZUR BERECHNUNG DER FLUIDMENGE
PRESSURISED FLUID CONTAINER WITH ELECTRONIC DEVICE FOR CALCULATION OF AUTONOMY

(30) Priorité: 06.04.2021 FR 2103506
(43) Date de publication de la demande: 12.10.2022
(73) Titulaire: L'Air Liquide, société anonyme pour l'Étude et l'Exploitation des procédés Georges Claude, 75007 Paris (FR)
(72) Inventeur: MARY, Alexis, 1804 Zemst (BE); MORIN, Bertrand, 92182 Antony Cedex (FR); PATEAU, Valérie, 92182 Antony Cedex (FR)
(74) Mandataire: Air Liquide

(56) Documents cités:
- FR-A1- 3 016 679
- FR-A1- 3 050 053
- FR-A3- 3 087 870

## Description

L'invention concerne un récipient de fluide sous pression, en particulier une bouteille de gaz, typiquement un gaz médical, comprenant un robinet de distribution de fluide et un dispositif électronique comprenant des moyens de mesure de pression permettant d'opérer des mesures successives de pression répétées à une fréquence donnée et des moyens de traitement de données permettant de déterminer une autonomie en fluide à partir de ces mesures de pression successives.

Les fluides ou gaz médicaux, tel l'oxygène, les mélanges NO/N₂, N₂O/O₂, He/O₂, l'air médical ou autre, sont généralement conditionnés dans des récipients de gaz sous pression, telles des bouteilles ou bonbonnes de gaz, qui sont équipés d'un robinet de distribution, avec (RDI) ou sans système de détente intégré, servant à fournir le gaz médical et d'un manomètre à aiguille ou d'un dispositif électronique à afficheur numérique servant à afficher la pression de gaz résiduelle ou une autonomie en gaz. En général, un capotage de protection rigide, aussi appelé « chapeau », sert à protéger le robinet et ses équipements contre les chocs, les chutes, les salissures...

Ainsi, EP-A-2918892 propose une bouteille de gaz équipée d'un robinet à détendeur intégré (RDI) et d'un dispositif électronique à écran d'affichage numérique, i.e. digital.

Un dispositif électronique de récipient de fluide sous pression comprend en général des capteurs de pression et de température, ainsi qu'un processeur et un écran d'affichage permettant de calculer et d'afficher notamment le volume de gaz résiduel, la pression de gaz et l'autonomie en gaz, notamment lesquels varient en fonction du débit de gaz délivré par le robinet.

Par exemple, on peut se référer à FR-A-3050053, FR-A-3087870 et FR-A-3016679 qui décrivent des bouteilles de gaz équipées de dispositifs électroniques servant à fournir des informations d'autonomie, de pression ou autres.

On a constaté en pratique que l'affichage de l'autonomie restante est souvent assez imprécis et/ou fluctuant, c'est-à-dire que les valeurs d'autonomie affichées remontent ou descendent régulièrement. Une telle imprécision conduit par exemple à faire décroitre l'autonomie par périodes de temps données, par exemple heure par heure ou 10 minutes par 10 minutes, ce qui entraîne une certaine incertitude pour l'utilisateur et/ou un niveau de confiance faible.

Ceci n'est pas satisfaisant car, en milieu médical, un utilisateur s'attend à voir l'autonomie décroitre minute par minute, c'est-à-dire à pouvoir bénéficier d'informations plus précises et plus fiables.

Or, cette imprécision est liée à plusieurs phénomènes qui peuvent se cumuler, en particulier à la précision du capteur de pression qui peut présenter des variations de mesures allant jusqu'à 100 mbar pour deux mesures identiques, aux phénomènes de température, telle la détente du gaz lors de son utilisation, aux restrictions de consommation énergétique, à la réactivité de l'affichage voulue par l'utilisateur (e.g. afficher en moins d'une seconde), à l'utilisation de débits faible (e.g. quelques litres par minute entraîne une faible chute de pression, comparable à l'imprécision du capteur), à un remplissage important du récipient

Tous ces phénomènes accentuent la difficulté à calculer et à fournir une autonomie plus fiable et plus précise, par exemple décroissant minute par minute.

Autrement dit, un problème est dès lors de pouvoir réaliser un calcul plus précis et un affichage plus fiable sur l'écran d'affichage numérique, de l'autonomie restante d'un récipient de fluide, en particulier une bouteille de gaz, notamment une bouteille d'oxygène médical, équipé d'un robinet de distribution de gaz et d'un dispositif électronique à écran d'affichage numérique.

Une solution selon l'invention porte sur un récipient de fluide sous pression, en particulier une bouteille de gaz, ayant un volume interne donné, comprenant un robinet de distribution de fluide comprenant :
- un organe de sélection du débit pouvant adopter plusieurs positions distinctes correspondant chacune à un débit de fluide donné compris entre 0 et 30 L/min, ledit organe de sélection du débit étant manipulable par un utilisateur pour sélectionner un débit désiré,
- et un dispositif électronique comprenant :
   ▪ des moyens de mesure de pression pour mesurer la pression du fluide contenu dans le récipient de fluide,
   ▪ des moyens de traitement de donnée à microprocesseur pour traiter au moins une partie des mesures de pression opérées par les moyens de mesure de pression et calculer une autonomie en fluide, et
   ▪ des moyens d'affichage pour afficher l'autonomie en fluide calculée par les moyens de traitement de données,
   caractérisé en ce que :
   - les moyens de mesure de pression sont configurés pour opérer plusieurs mesures successives de pression (P₁...Pₙ), lesdites mesures successives de pression (P₁...Pₙ) étant répétées à une fréquence donnée (F) comprise entre 5 et 300 secondes, ces pluralités de mesures successives de pression (P₁...Pₙ) formant des blocs de mesures de pression, et
   - les moyens de traitement de données sont configurés pour déterminer l'autonomie en fluide en déterminant au moins une variation de pression à partir desdits blocs de mesures de pression (P₁...Pₙ) mesurées par les moyens de mesure de pression à la fréquence donnée (F) et d'au moins un paramètre additionnel choisi parmi la position de l'organe de sélection du débit, la température du fluide et le volume du récipient de fluide.

Selon le mode de réalisation considéré, le récipient de fluide sous pression de l'invention peut comprendre l'une ou plusieurs des caractéristiques suivantes :
- lesdites mesures successives de pression (P₁...Pₙ) sont répétées à une fréquence donnée (F) pendant une période de temps (dt).
- la période de temps (dt) est de plusieurs jours, plusieurs semaines, plusieurs mois ou plusieurs années.
- lesdites mesures successives de pression (P₁...Pₙ) sont répétées à une fréquence donnée (F) sans interruption, c'est-à-dire opérées en permanence que le récipient soit utilisé ou non-utilisé, par exemple stocké.
- lesdites mesures successives de pression (P₁...Pₙ) sont répétées à une fréquence donnée (F) comprise entre 5 et 150 secondes, de préférence entre 5 et 90 secondes, de préférence encore entre 5 et 30 secondes.
- l'organe de sélection du débit est configuré pour adopter des positions distinctes correspondant à des débits de fluide compris entre 0 et 25 L/min.
- il comprend au moins un capteur de position configuré pour déterminer la position de l'organe de réglage du débit.
- il comprend au moins un capteur de température configuré pour mesurer la température du fluide.
- le volume donné du récipient de fluide est mémorisé par les moyens de traitement de données, en particulier par le microprocesseur ou des moyens de mémorisation, de préférence le volume donné du récipient de fluide est compris entre 1 L et 20 L.
- ladite au moins une variation de pression est une pente de baisse de pression.
- l'organe de sélection du débit comprend un organe rotatif, de préférence un volant rotatif, et les positions sélectionnables sont des positions angulairement décalées.

Plus généralement, le récipient de fluide sous pression de l'invention peut aussi comprendre l'une ou plusieurs des caractéristiques additionnelles suivantes :
- il comprend un capteur combiné de pression et de température.
- le ou les capteurs de pression et de température est/sont en communication fluidique avec un circuit de gaz interne du robinet de distribution de fluide de manière à y opérer les mesures de pression et/ou de température.
- le récipient comprend un volume interne de stockage du fluide compris entre 1 L et 20 L (équivalent en eau), de préférence entre 2 et 15 L (en eau).
- le volume interne du récipient de fluide est mémorisé par les moyens de traitement de données, en particulier par le microprocesseur ou des moyens de mémorisation, par exemple une mémoire type EEPROM ou analogue.
- les moyens de traitement de données sont configurés pour traiter la position de l'organe de sélection du débit déterminée par ledit au moins un capteur de position afin d'en déduire le débit de fluide sélectionné par l'utilisateur.
- les moyens de traitement de données comprennent un compteur temporel.
- le ou les capteurs est/sont connectés électriquement aux moyens de traitement de données pour fournir des mesures (i.e. signaux) de pression et/ou de température du fluide auxdits moyens de traitement de données.
- le capteur de température est configuré pour mesurer une ou des températures comprises entre -40°C et +70°C.
- les moyens de traitement de données comprennent un ou plusieurs microprocesseurs mettant en œuvre un ou plusieurs algorithmes.
- la carte électronique est agencée dans le dispositif électronique.
- la carte électronique porte le ou les microprocesseurs.
- le (ou les) microprocesseur, sont configurés pour traiter les mesures de pression et/ou de température fournies par le ou les capteurs de pression et de température.
- les moyens de traitement de données comprennent la carte électronique.
- les moyens de traitement de données comprennent au moins un microprocesseur intégré sous forme d'un microcontrôleur.
- le (ou les) microprocesseur(s), en particulier le (ou les) microcontrôleur, est configuré pour enregistrer des données, notamment au sein d'un logiciel ou algorithme dédié.
- le passage interne du robinet de distribution de fluide au sein duquel sont opérées les mesures de pression et de température du fluide est en communication fluidique avec le volume interne du récipient de gaz où est stocké le fluide sous pression, en particulier du gaz sous pression.
- les moyens de traitement de données et les moyens d'affichage sont alimentés en courant électrique par une source de courant électrique.
- le ou les capteurs sont alimentés en courant électrique par la ou une source de courant électrique.
- la source de courant électrique comprend une ou plusieurs batteries ou piles électriques, rechargeables ou non.
- le (ou les) capteur unique de pression et/ou de température comprend une électronique embarquée permettant de déterminer la pression et/ou la température du gaz.
- le capteur combiné de pression et de température comprend une électronique embarquée comprenant des moyens à membrane pour déterminer la pression du gaz et des moyens à sonde de température pour mesurer la température du gaz.
- les moyens à membrane et les moyens à sonde de température sont agencés de manière à être en contact avec le gaz véhiculé par le passage interne du corps de capteur, c'est-à-dire un seul et même conduit de gaz.
- l'électronique embarquée du capteur unique de pression et de température est connectée électriquement aux moyens de traitement de données pour leur communiquer des signaux et/ou des valeurs de pression et de température mesurées.
- l'électronique embarquée du capteur unique de pression et de température comprend un (ou plusieurs) microprocesseur additionnel.
- le dispositif électronique est un manomètre digital configuré pour afficher la pression de fluide, le volume de fluide dans le récipient, le débit de gaz fourni par le robinet et par ailleurs l'autonomie en gaz, i.e. durée d'utilisation par rapport à la quantité de fluide résiduel dans le récipient et/ou au débit de fourniture du gaz par le robinet.
- les moyens d'affichage du dispositif électronique comprennent un écran d'affichage numérique, aussi appelé un afficheur numérique, i.e. tel un écran d'affichage digital, par exemple un écran d'affichage de type LCD.
- le robinet de distribution de fluide comprend un raccord ou embout de sortie en débit pour délivrer le fluide au débit désiré, typiquement un gaz, en particulier un gaz médical.
- le robinet de distribution de fluide comprend un orifice d'entrée de fluide en communication fluidique avec le circuit de gaz interne du robinet de distribution de fluide de manière à permettre l'entrée de fluide sous pression provenant du volume interne du récipient de fluide, dans le circuit de gaz interne du robinet de distribution de fluide.
- l'orifice d'entrée de fluide du robinet de distribution de fluide est en communication fluidique avec le volume interne du récipient de fluide.
- le circuit de gaz interne du robinet de distribution de fluide relie fluidiquement l'orifice d'entrée de fluide du robinet de distribution au raccord de sortie du robinet de distribution, en particulier le raccord de sortie en débit auquel vient se raccorder un dispositif utilisant ou convoyant le fluide, par exemple un appareil médical ou un conduit flexible.
- le robinet de distribution de fluide comprend un embout, i.e. une expansion, de fixation fileté de forme tronconique ou cylindrique.
- l'embout de fixation fileté du robinet de distribution porte l'orifice d'entrée de fluide.
- le récipient est une bouteille de gaz sous pression.
- la bouteille de gaz comprend un col portant l'orifice de sortie de fluide communication fluidique avec l'intérieur de la bouteille de gaz, c'est-à-dire avec le volume interne contenant le gaz sous pression.
- l'orifice de sortie de fluide de la bouteille de gaz est taraudé.
- l'embout de fixation fileté du robinet de distribution de fluide est vissé dans le col taraudé de la bouteille de gaz.
- le circuit de gaz interne du robinet de distribution de fluide est aménagé, par exemple percé, dans le corps du robinet de distribution de fluide.
- le raccord de sortie en débit du robinet de distribution de fluide est configuré pour être connecté fluidiquement à une conduite de gaz flexible ou un autre dispositif utilisant le fluide, tel un dispositif ou appareil médical.
- les moyens de traitement de données sont agencés dans un boitier rigide du dispositif électronique.
- le dispositif de sélection de débit comprend un volant rotatif configuré pour se déplacer entre plusieurs positions angulairement décalées les uns des autres, chaque position correspondant à une valeur de débit de gaz désiré donnée.
- le dispositif de sélection de débit comprend des marquages correspondant aux débits de gaz désirés sélectionnables.
- le dispositif de sélection de débit coopère en outre avec un dispositif de réglage de débit agencé dans le corps du robinet afin de régler le débit à la valeur de débit de gaz désiré.
- le dispositif de réglage de débit comprend un disque à orifices calibré agencé sur le trajet du gaz dans le corps du robinet.
- le raccord de sortie de gaz est agencé au centre du volant rotatif, c'est-à-dire qu'ils sont agencés coaxialement l'un à l'autre.
- l'afficheur numérique du dispositif électronique est configuré pour afficher différentes informations utiles à l'utilisateur, en particulier une autonomie en gaz, une pression de gaz, un volume de gaz, un débit de gaz ou encore une icône d'alerte, par exemple d'alerte d'autonomie ou de clampage de tuyau, ou d'autres informations ou représentations graphiques, par exemple un barre-graphe ou autre.
- les moyens de traitement de données sont configurés pour déclencher une alerte sonore et une alerte visuelle en cas de déclenchement d'une alerte, notamment une alerte de clampage ou d'une alerte d'autonomie.
- le dispositif électronique comprend en outre des moyens de mémorisation de données.
- les moyens de mémorisation de données comprennent une mémoire morte, de préférence une EEPROM ou analogue.
- les moyens de mémorisation de données sont agencés sur une carte électronique, de préférence sur la carte électronique portant le microprocesseur.
- le dispositif électronique est fixé au corps du robinet de distribution de gaz, notamment par vissage ou par un système à goupille.
- la source d'énergie électrique alimente électriquement la carte électrique, le (ou les) microprocesseurs, et tous les composants fonctionnant avec du courant électrique, comme l'afficheur numérique, le capteur de pression et de température et/ou une LED d'alerte.
- le robinet de distribution de fluide est protégé par un capotage de protection comprenant un corps de capotage rigide agencé autour dudit robinet de distribution de fluide.
- la source de courant électrique est agencé dans un compartiment du capotage de protection.
- le boîtier du dispositif électronique comprenant l'afficheur numérique est logé dans une ouverture aménagée dans le corps de capotage.
- le corps de capotage définit un espacement interne dimensionné pour loger le robinet de distribution de gaz.
- le corps de capotage est en matériau polymère, en métal ou leurs combinaisons.
- le corps de capotage comprend une (ou plusieurs) poignée de portage, de préférence la poignée de portage est agencée de manière à surmonter le capotage, c'est-à-dire qu'elle est située sensiblement au-dessus du capotage.
- le robinet de distribution de gaz est un robinet à détendeur intégré ou RDI, c'est-à-dire un robinet incluant un système de détente de fluide agencé sur le circuit interne véhiculant le fluide depuis le récipient vers le raccord de sortie.
- des moyens de détente de gaz sont agencés sur le circuit interne de gaz.
- les moyens de détente de gaz comprennent un clapet de détente et un siège de clapet. Ils permettant de réduire la pression du gaz depuis la pression haute du gaz stocké dans le récipient, typiquement plusieurs dizaines à centaines de bar, jusqu'à une pression d'utilisation préfixée plus basse, typiquement de quelques bar, par exemple de 2 à 5 bar abs.
- le robinet de distribution de fluide est en alliage de cuivre, tel du laiton.
- le corps de capotage comprend en outre un système d'accrochage conçu pour permettre son accrochage à un support, en particulier à un barreau de lit d'hôpital ou à un brancard de transport de patient ou analogue.
- le corps de capotage comprend en outre un système d'accrochage mobile, de préférence pivotant.
- le récipient de fluide contient, lorsqu'il est plein, un gaz à une pression d'au moins 130 à 200 bar abs, typiquement plus de 200 bar abs, voire d'au moins 300 bar abs.
- le récipient a une forme générale cylindrique, en particulier d'ogive, en métal ou alliage métallique (e.g. acier, aluminium....) ou en matériau(x) composite(s).
- le récipient de fluide contient un gaz ou mélange gazeux, tel de l'oxygène, un mélange NO/N₂, O₂/N₂O ou He/O₂, de l'air ou un autre gaz médical.

L'invention porte aussi sur une utilisation d'un récipient selon l'invention pour stocker ou pour fournir un gaz sous pression, en particulier un gaz médical choisi parmi l'oxygène ou un mélange gazeux N₂O/O₂, NO/N₂ ou He/O₂, ou de l'air médical.

L'invention va maintenant être mieux comprise grâce à la description détaillée suivante, faite à titre illustratif mais non limitatif, en référence aux figures annexées parmi lesquelles :
Fig. 1 est un schéma de principe d'un récipient de fluide équipé d'un robinet de distribution de gaz à dispositif électronique selon l'invention, et
Fig. 2 représente un mode de réalisation d'un récipient de fluide de type bouteille de gaz sous pression selon l'invention.
Fig. 3 schématise les mesures successives de pression à la fréquence donnée opérée par un dispositif électronique d'un récipient de fluide selon l'invention.

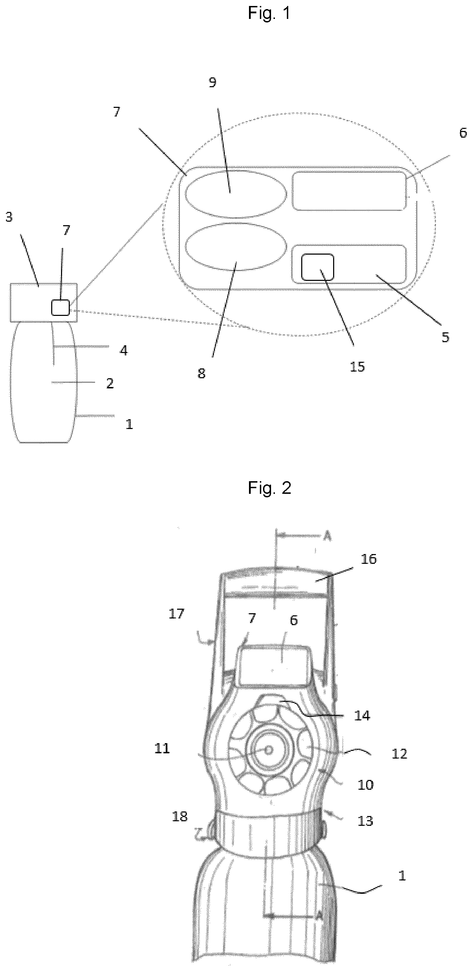

Fig. 1 est un schéma de principe d'un récipient de fluide 1 sous pression selon l'invention, alors que la Fig. 2 représente un mode de réalisation d'un tel récipient de fluide 1, à savoir ici une bouteille de gaz sous pression d'axe AA.

Le récipient de fluide 1 comprend un volume interne 2 de stockage de gaz sous pression, par exemple de plus de 200 bar abs (pression à plein), et est équipé d'un robinet de distribution de fluide 3, tel un RDI, traversé par un passage ou circuit interne de fluide (non montré) en communication fluidique avec le volume interne 2 du récipient 1 de manière à convoyer le fluide, à savoir ici du gaz, tel de l'oxygène, au sein du corps du robinet de distribution de gaz 3 jusqu'à un raccord de sortie 11, visible en Fig. 2, en débit auquel vient se raccorder fluidiquement par exemple une conduite de gaz flexible (non montrée) ou un autre dispositif utilisant le gaz délivré.

La bouteille ou récipient 1 de gaz sous pression de la Fig. 2 comprend un corps cylindrique et un col, c'est-à-dire qu'elle est en forme d'ogive. Le corps cylindrique définit le volume interne 2 de stockage de gaz sous pression, typiquement une pression maximale entre 130 et 300 bar abs, voire au-delà de 300 bar abs. Le col comprend un orifice d'entrée/sortie de fluide communicant avec le volume interne 2 et permettant de soutirer le gaz du volume interne 2 ou, à l'inverse, de le remplir lorsqu'il est vide. Le robinet de distribution de gaz 3 est monté, typiquement vissé, au niveau de l'orifice du col de la bouteille de gaz.

Le récipient 1 a une forme générale cylindrique et est en métal ou alliage métallique (e.g. acier, aluminium....) ou en matériau(x) composite(s). Il contient un gaz ou mélange gazeux, tel de l'oxygène, un mélange NO/N₂, O₂/N₂O ou He/O₂, de l'air ou tout autre gaz médical, typiquement de l'oxygène médical.

Le robinet de distribution de gaz 3, qui est ici un **RDI** incluant des moyens de détente interne, est visé, via une expansion ou un embout de fixation fileté, au niveau du col de la bouteille de gaz, c'est-à-dire qu'il vient se visser dans l'orifice d'entrée/sortie de fluide qui lui porte un taraudage complémentaire.

Le robinet de distribution de gaz 3 comprend par ailleurs un raccord ou embout de distribution de gaz, appelé raccord de sortie en débit 11, auquel peut être raccordé par exemple une conduite de gaz flexible, tel un tuyau en plastique flexible, servant à convoyer le gaz jusqu'à un appareil ou dispositif médical utilisant le gaz fourni par le robinet 3, par exemple un masque respiratoire distribuant du gaz à un patient à un débit prescrit par un médecin ou analogue correspondant un traitement à suivre. Le corps de robinet est préférentiellement en laiton ou en acier inoxydable.

Par ailleurs, le robinet de distribution de gaz 3 comprend soit un capteur de pression 4 et un capteur de température distincts, soit un capteur unique de pression et de température, servant à mesurer la pression et/ou la température du gaz, au sein du passage interne de gaz et/ou dans le volume interne 2 du récipient 1, et fournir des mesures de pression (i.e. une valeur numérique ou un signal correspond à une valeur numérique) à des moyens de traitement de données 5 à microprocesseur 15.

Préférentiellement, on utilise un capteur unique 4 de pression et de température car ce type de capteur permet de simplifier l'architecture globale du robinet en réduisant le nombre de piquages ou perçages nécessaires pour opérer les mesures, ce qui par ailleurs réduit le risque de fuites.

Les moyens de traitement de données 5 à microprocesseur 15 sont ou comprennent un dispositif ou une unité de traitement de données comprenant un ou plusieurs microprocesseurs mettant en œuvre un ou plusieurs algorithmes, par exemple une carte électronique portant un (ou des) microprocesseur 15 mettant en œuvre un ou des algorithmes de calcul ou autres, de préférence un (ou des) microcontrôleur. Les moyens de traitement de données 5 sont aussi appelés moyens de pilotage, électronique de commande ou analogue.

Les moyens de traitement de données 5 à microprocesseur 15, sont configurés pour traiter les mesures de pression brute et de température brute fournies par le ou les capteurs de pression et de température. Ils sont préférentiellement agencés dans le boîtier du dispositif électronique 7, par exemple un manomètre numérique, fixé sur le robinet de distribution de fluide 3, lequel comprend par ailleurs un afficheur numérique 6, tel un écran LCD ou analogue, servant à afficher l'autonomie ou d'autres paramètres.

Il est en outre prévu un dispositif de sélection de débit 12 actionnable par un utilisateur, tel un volant rotatif, servant à sélectionner un débit de gaz désiré devant être délivré par le raccord de sortie 11 en débit, par exemple pour répondre à une prescription d'un médecin ou analogue. Comme illustré en Fig. 2, le dispositif de sélection de débit 12 peut être un volant rotatif apte à se déplacer en rotation entre plusieurs positions angulaires, décalées les uns des autres, qui correspondent chacune à une valeur de débit donnée, à savoir typiquement des valeurs de débit de gaz sélectionnables comprises entre 0 L/min et 30 L/min, de préférence entre 0 et 25 L/min.

Par exemple, les valeurs de débit sélectionnables peuvent être les suivantes : 0, 0.5, 1, 2, 3, 5, 8, 10, 12, 15, 20, 22 et 25 L/min, ou toute autre valeur. La valeur de débit désiré sélectionnée par l'utilisateur par actionnement du dispositif de sélection de débit 12, i.e. volant rotatif, apparaît dans une fenêtre de lecture 14 située au-dessus du dispositif de sélection de débit 12, par exemple une découpe aménagée dans le corps 10 du capotage de protection 13 agencé autour du robinet 3 et servant à le protéger contre les chocs ou autres agressions extérieures.

Le dispositif de sélection de débit 12 coopère en outre avec un dispositif de réglage de débit agencé dans le corps du robinet 3 afin de régler le débit à la valeur de débit de gaz désiré, par exemple le dispositif de réglage de débit peut un disque à orifices calibré agencé sur le trajet du gaz dans le corps du robinet 3. Un tel agencement est connu en soi.

Une fois le débit de gaz désiré sélectionné, la position du dispositif de sélection de débit 12, par exemple la position angulaire du volant rotatif, peut être déterminée grâce à un ou plusieurs capteurs de position. Connaitre la position angulaire du volant rotatif permet alors aux moyens de traitement de données 5 de connaître la valeur du débit de gaz désiré ayant été sélectionnée.

Dans le mode de réalisation de la Fig. 2, le raccord de sortie en débit 11 est agencé au centre et coaxialement au volant rotatif de sélection de débit 12 ; toutefois, ils pourraient aussi être séparés l'un de l'autre selon d'autres modes de réalisation possibles (non montrés).

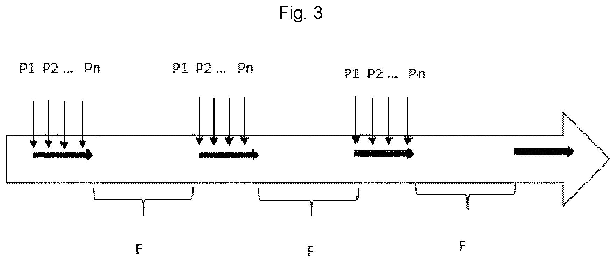

Par ailleurs, le (ou les) capteur de pression 4 est configuré et agencé pour mesurer la pression du gaz dans la bouteille 1, c'est-à-dire provenant du volume interne 2, et fournir ensuite les mesures de pression opérées aux moyens de traitement de données 5 (i.e. valeurs numériques ou signaux correspondant à des valeurs numériques), comme expliqué ci-après en référence à Fig. 3.

Les mesures de pression (ou de température) opérées et transmises par le ou les capteurs de pression 4 et de température sont par exemple des signaux qui représentent soit des valeurs de pression brute et/ou de température brute, soit d'autres grandeurs, comme des valeurs de tension ou de courant, correspondant à des valeurs de pression brute et/ou de température brute. Ces mesures de pression et/ou de température sont traitées, par les moyens de traitement de données 5 pour déterminer l'autonomie, voire d'autres informations comme le volume de gaz dans le récipient 1, la pression de gaz dans le récipient 1 ou autre.

Ces informations peuvent être affichées sur l'afficheur 6 à destination d'un utilisateur, typiquement un personnel soignant, comme un médecin ou une infirmière.

Il est aussi prévu un compteur temporel, par exemple interne aux moyens de traitement de données 5, afin de permettre les calculs de durée ou autres suivis temporels.

Le volume interne 2 du récipient 1 (en équivalent eau) est une valeur connue qui peut être mémorisée par des moyens de mémorisation 9 soit directement dans un logiciel mis en œuvre par le microprocesseur 15, soit dans une mémoire informatique de type EEPROM ou analogue, du dispositif électronique 7. La mémoire informatique peut être agencée sur la carte électronique portant le microprocesseur 15 et reliée électriquement à ce dernier. Par exemple, les bouteilles de gaz équipées de ce type utilisées pour distribuer de l'oxygène médical (i.e. de qualité médicale) ont typiquement des volumes internes 2 compris entre 1 L et 20 L (équiv. en eau), typiquement entre 2 L et 15 L, par exemple, selon la bouteille considérée, le volume peut être de l'ordre de 2 L, 3.5 L, 4.6 L, 5 L, 7 L, 10 L, 11 L ou 15 L.

Les moyens de mémorisation 9 peuvent aussi enregistrer d'autres données, comme par exemple la durée s'écoulant entre des instants successifs, les mesures de pression et/ou de température ... ou d'autres paramètres, comme la position du sélecteur, la configuration de la bouteille, la pression de remplissage, les alertes...

Plus généralement, le dispositif électronique 7, par exemple un manomètre numérique, qui comprend les moyens de traitement de données 5 à microprocesseur 15, telle une carte électronique, est logé dans une ouverture ou logement prévu dans le corps 10 du capotage de protection 13 agencé autour du robinet de distribution de fluide 3 et servant à le protéger contre les chocs ou autres détériorations possibles, par exemple un capotage rigide en polymère et/ou en métal, comme illustré en Fig. 2.

Le corps 10 du capotage 13 définit un volume ou logement dimensionné pour loger le robinet de distribution de gaz, à savoir ici un robinet à détendeur intégré ou RDI. Il comprend par ailleurs une (ou plusieurs) poignée de portage 16 agencée ici de manière à surmonter le capotage 13, c'est-à-dire qu'elle est située sensiblement au-dessus du corps 10 du capotage 13, en étant reliée au corps 10 par ici deux montants-supports 17 se projetant sensiblement vers le haut.

Selon un mode de réalisation, le corps 10 de capotage peut comprendre en outre un système d'accrochage 18 (non totalement visible), de préférence une accroche pivotante, conçu pour permettre son accrochage à un support, en particulier à un barreau de lit d'hôpital ou à un brancard de transport de patient ou analogue.

L'afficheur numérique 6 du dispositif électronique 7 comprend un écran numérique, i.e. digital, par exemple à cristaux liquides (LCD) ou autre, porté par le boitier rigide, en particulier la face avant, du dispositif électronique 7, comme illustré en Fig. 2. Il peut être à affichage en couleurs ou en noir et blanc.

L'afficheur numérique 6 est alimenté électriquement par une source d'énergie électrique (non visible) agencée dans le capotage 13, par exemple une ou des batteries ou piles disposées dans un logement à piles aménagé dans la paroi du corps de capotage et fermé par une trappe amovible ou analogue. La source d'énergie électrique sert aussi à alimenter les autres composants du dispositif électronique 7 ayant besoin de courant électrique pour fonctionner, notamment les moyens de traitement de données 5 à microprocesseur 15.

Comme déjà expliqué, l'afficheur numérique 6 du dispositif électronique 7 permet d'afficher toutes les informations utiles à l'utilisateur, comme par exemple des valeurs de pression, de volume de gaz, une autonomie (en heures et minutes) ou d'autres informations ou données, par exemple la valeur du débit de gaz désiré ou réel (en L/min ou en une autre unité), ou l'autonomie en gaz (en heures et minutes) peut aussi être représentée par un barre-graphe. Par exemple, l'afficheur numérique 6 comprend un écran de hauteur comprise entre 29 et 37 mm environ et de largeur par exemple comprise entre 39 et 43 mm environ.

Les moyens de traitement de données 5 à microprocesseur 15, typiquement une carte électronique, sont aussi configurés pour commander des moyens d'alerte sonore et/ou des moyens d'alerte visuelle, de préférence les deux, de manière à déclencher au moins une alerte sonore et/ou une alerte visuelle, de préférence les deux, en cas de détection d'un dysfonctionnement, en particulier un clampage, ou d'une quantité de gaz ou autonomie trop basse.

Selon l'invention, les moyens de traitement de données 5 sont configurés pour réaliser un calcul plus précis l'autonomie restante de la bouteille de gaz à partir de mesures successives de pression (P₁...Pₙ) opérées par les moyens de mesure de pression 4, typiquement un capteur de pression.

Plus précisément, comme illustré en Fig. 3, les moyens de mesure de pression 4 sont configurés pour opérer, de préférence en permanence, des mesures successives de pression (P₁...Pₙ) qui sont répétées au fil du temps à une fréquence donnée (F) comprise entre 5 et 300 secondes, de préférence entre 5 et 30 secondes. Ces pluralités de mesures successives de pression (P₁...Pₙ) forment des ensembles, blocs ou groupes de mesures de pression, comme visible sur Fig. 3.

Par ailleurs, les moyens de traitement de données 5 déterminent l'autonomie en fluide à partir de ces mesures de pression (P₁...Pₙ) mesurées à la fréquence donnée (F).

Ces mesures de pression (P₁...Pₙ) successives permettent d'établir une variation de pression au fil du temps, à savoir une ou des pentes de baisse de pression en fonction du temps. Ce sont alors ces pentes de baisse de pression qui permettent de calculer l'autonomie.

De plus, un (ou des) paramètre additionnel choisi parmi la position de l'organe de sélection du débit 12, la température du fluide et le volume du récipient de fluide est (sont) utilisé(s) pour calculer l'autonomie de manière encore plus précise. Ce calcul peut se faire de manière connue en soi.

Un récipient 1 de gaz sous pression, en particulier une bouteille de gaz, selon l'invention est particulièrement bien adapté au stockage et à la fourniture d'oxygène médicinal ou de tout autre gaz médicinal.

## Revendications

1. Récipient (1) de fluide sous pression, en particulier une bouteille de gaz, ayant un volume interne (2) donné, comprenant un robinet de distribution (3) de fluide comprenant :
- un organe de sélection du débit (12) pouvant adopter plusieurs positions distinctes correspondant chacune à un débit de fluide donné compris entre 0 et 30 L/min, ledit organe de sélection du débit (12) étant manipulable par un utilisateur pour sélectionner un débit désiré,
- et un dispositif électronique (7) comprenant :
▪ des moyens de mesure de pression pour mesurer la pression du fluide contenu dans le récipient de fluide,
▪ des moyens de traitement de données (5) à microprocesseur (15) pour traiter au moins une partie des mesures de pression opérées par les moyens de mesure de pression et calculer une autonomie en fluide, et
▪ des moyens d'affichage (6) pour afficher l'autonomie en fluide calculée par les moyens de traitement de données (5),
**caractérisé en ce que** :
- les moyens de mesure de pression sont configurés pour opérer plusieurs mesures successives de pression (P₁...Pₙ), lesdites mesures successives de pression (P₁...Pₙ) étant répétées à une fréquence donnée (F) comprise entre 5 et 300 secondes, ces pluralités de mesures successives de pression (P₁...Pₙ) formant des blocs de mesures de pression, et
- les moyens de traitement de données (5) sont configurés pour déterminer l'autonomie en fluide en déterminant au moins une variation de pression à partir desdits blocs de mesures de pression (P₁...Pₙ) mesurées par les moyens de mesure de pression à la fréquence donnée (F) et d'au moins un paramètre additionnel choisi parmi la position de l'organe de sélection du débit (12), la température du fluide et le volume du récipient de fluide.

2. Récipient selon la revendication 1, **caractérisé en ce que** lesdites mesures successives de pression (P₁...Pₙ) sont répétées à une fréquence donnée (F) comprise entre 5 et 30 secondes.

3. Récipient selon la revendication 1, **caractérisé en ce que** lesdites mesures successives de pression (P₁...Pₙ) sont opérées en permanence.

4. Récipient selon la revendication 1, **caractérisé en ce qu'**il comprend au moins un capteur de position configuré pour déterminer la position de l'organe de réglage du débit (12) et/ou au moins un capteur de température configuré pour mesurer la température du fluide.

5. Récipient selon la revendication 1, **caractérisé en ce que** le volume donné du récipient de fluide est mémorisé par les moyens de traitement de données (5), en particulier par le microprocesseur (15) ou des moyens de mémorisation.

6. Récipient selon la revendication 5, **caractérisé en ce que** le volume donné du récipient de fluide est compris entre 1 L et 20 L.

7. Récipient selon la revendication 1, **caractérisé en ce que** ladite au moins une variation de pression est une pente de baisse de pression.

8. Récipient selon la revendication 1, **caractérisé en ce que** l'organe de sélection du débit (12) comprend un organe rotatif, de préférence un volant rotatif, et les positions sélectionnables sont des positions angulairement décalées.

9. Récipient selon la revendication 1, **caractérisé en ce que** lesdites mesures successives de pression (P₁...Pₙ) sont répétées à une fréquence donnée (F) pendant une période de temps (dt) de plusieurs jours, plusieurs semaines, plusieurs mois ou plusieurs années.

10. Récipient selon la revendication 1, **caractérisé en ce que** lesdites mesures successives de pression (P₁...Pₙ) sont répétées à une fréquence donnée (F) sans interruption, que le récipient soit utilisé ou non-utilisé.

11. Utilisation d'un récipient de fluide (1) selon l'une des revendications précédentes, pour stocker ou pour fournir un gaz sous pression, en particulier un gaz médical choisi parmi l'oxygène ou un mélange gazeux N₂O/O₂, NO/N₂, He/O₂, de l'air médical.

12. Utilisation selon la revendication 11, **caractérisée en ce que** le gaz sous pression est de l'oxygène.

## Patentansprüche

1. Druckfluidbehälter (1), insbesondere eine Gasflasche, mit einem gegebenen Innenvolumen (2), umfassend ein Fluidabgabeventil (3), umfassend:
- ein Volumenstromauswahlelement (12), das mehrere unterschiedliche Positionen einnehmen kann, von denen jede einem gegebenen Fluidvolumenstrom zwischen 0 und 30 l/min entspricht, wobei das Volumenstromauswahlelement von einem Benutzer betätigbar ist, um einen gewünschten Volumenstrom (12) auszuwählen,
- und eine elektronische Vorrichtung (7), umfassend:
■ Druckmessmittel zum Messen des Drucks des in dem Fluidbehälter enthaltenen Fluids,
■ Datenverarbeitungsmittel (5) mit Mikroprozessor (15) zum Verarbeiten mindestens eines Teils der von den Druckmessmitteln vorgenommenen Druckmessungen und Berechnen einer Fluidreichweite, und
■ Anzeigemittel (6) zum Anzeigen der von den Datenverarbeitungsmitteln (5) berechneten Fluidreichweite,
**dadurch gekennzeichnet, dass**:
- die Druckmessmittel dazu ausgestaltet sind, mehrere aufeinander folgende Druckmessungen (P₁...Pₙ) vorzunehmen, wobei die aufeinander folgenden Druckmessungen (P₁...Pₙ) mit einer gegebenen Häufigkeit (F) zwischen 5 und 300 Sekunden wiederholt werden, wobei diese Mehrzahlen von aufeinander folgenden Druckmessungen (P₁...Pₙ) Druckmessungsblöcke bilden, und
- die Datenverarbeitungsmittel (5) dazu ausgestaltet sind, die Fluidreichweite zu ermitteln, indem mindestens eine Druckänderung ausgehend von den von den Druckmessmitteln mit der gegebenen Häufigkeit (F) gemessenen Druckmessungsblöcken (P₁...Pₙ) und von mindestens einem zusätzlichen Parameter, der aus der Position des Volumenstromauswahlelements (12), der Temperatur des Fluids und dem Volumen des Fluidbehälters gewählt ist, ermittelt wird.

2. Behälter nach Anspruch 1, **dadurch gekennzeichnet, dass** die aufeinander folgenden Druckmessungen (P₁...Pₙ) mit einer gegebenen Häufigkeit (F) zwischen 5 und 30 Sekunden wiederholt werden.

3. Behälter nach Anspruch 1, **dadurch gekennzeichnet, dass** die aufeinander folgenden Druckmessungen (P₁...Pₙ) ständig vorgenommen werden.

4. Behälter nach Anspruch 1, **dadurch gekennzeichnet, dass** er mindestens einen Positionssensor, der dazu ausgestaltet ist, die Position des Volumenstromeinstellelements (12) zu ermitteln, und/oder mindestens einen Temperatursensor, der dazu ausgestaltet ist, die Temperatur des Fluids zu messen, umfasst.

5. Behälter nach Anspruch 1, **dadurch gekennzeichnet, dass** das gegebene Volumen des Fluidbehälters von den Datenverarbeitungsmitteln (5), insbesondere von dem Mikroprozessor (15) oder Speichermitteln, gespeichert wird.

6. Behälter nach Anspruch 5, **dadurch gekennzeichnet, dass** das gegebene Volumen des Fluidbehälters zwischen 1 1 und 20 1 beträgt.

7. Behälter nach Anspruch 1, **dadurch gekennzeichnet, dass** die mindestens eine Druckänderung ein Druckgefälle ist.

8. Behälter nach Anspruch 1, **dadurch gekennzeichnet, dass** das Volumenstromauswahlelement (12) ein drehbares Element, bevorzugt ein drehbares Rad, umfasst und die auswählbaren Positionen winklig versetzte Positionen sind.

9. Behälter nach Anspruch 1, **dadurch gekennzeichnet, dass** die aufeinander folgenden Druckmessungen (P₁...Pₙ) mit einer gegebenen Häufigkeit (F) während eines Zeitraums (dt) von mehreren Tagen, mehreren Wochen, mehreren Monaten oder mehreren Jahren wiederholt werden.

10. Behälter nach Anspruch 1, **dadurch gekennzeichnet, dass** die aufeinander folgenden Druckmessungen (P₁...Pₙ) mit einer gegebenen Häufigkeit (F) ohne Unterbrechung wiederholt werden, unabhängig davon, ob der Behälter verwendet wird oder nicht.

11. Verwendung eines Fluidbehälters (1) nach einem der vorhergehenden Ansprüche, um ein Druckgas, insbesondere ein medizinisches Gas, das aus Sauerstoff oder einem Gasgemisch N₂O/O₂, NO/N₂, He/O₂, medizinischer Luft gewählt ist, zu speichern oder auszugeben.

12. Verwendung nach Anspruch 11, **dadurch gekennzeichnet, dass** das Druckgas Sauerstoff ist.

## Claims

1. Container (1) for pressurized fluid, in particular a gas cylinder, having a given internal volume (2), comprising a fluid distribution valve (3) comprising:
- a member for selecting the flow rate (12) able to adopt a plurality of distinct positions each corresponding to a given fluid flow rate between 0 and 30 L/min, said member for selecting the flow rate (12) being able to be manipulated by a user in order to select a desired flow rate,
- and an electronic device (7) comprising:
■ means for measuring pressure in order to measure the pressure of the fluid contained in the fluid container,
■ microprocessor (15)-based data processing means (5) for processing at least some of the pressure measurements taken by the means for measuring pressure and calculating a remaining fluid, and
■ display means (6) for displaying the remaining fluid calculated by the data processing means (5),
**characterized in that**:
- the means for measuring pressure are configured to take a plurality of successive pressure measurements (P₁...Pₙ), said successive pressure measurements (P₁...Pₙ) being repeated at a given frequency (F) between 5 and 300 seconds, these pluralities of successive pressure measurements (P₁...Pₙ) forming blocks of pressure measurements, and
- the data processing means (5) are configured to determine the remaining fluid by determining at least one pressure variation based on said blocks of pressure measurements (P₁...Pₙ) measured by the means for measuring pressure at the given frequency (F) and at least one additional parameter chosen from among the position of the member for selecting the flow rate (12), the temperature of the fluid and the volume of the fluid container.

2. Container according to Claim 1, **characterized in that** said successive pressure measurements (P₁...Pₙ) are repeated at a given frequency (F) between 5 and 30 seconds.

3. Container according to Claim 1, **characterized in that** said successive pressure measurements (P₁...Pₙ) are taken continuously.

4. Container according to Claim 1, **characterized in that** it comprises at least one position sensor configured to determine the position of the member for regulating the flow rate (12) and/or at least one temperature sensor configured to measure the temperature of the fluid.

5. Container according to Claim 1, **characterized in that** the given volume of the fluid container is stored by the data processing means (5), in particular by the microprocessor (15) or storage means.

6. Container according to Claim 5, **characterized in that** the given volume of the fluid container is between 1 L and 20 L.

7. Container according to Claim 1, **characterized in that** said at least one pressure variation is a slope of the pressure drop.

8. Container according to Claim 1, **characterized in that** the member for selecting the flow rate (12) comprises a rotary member, preferably a rotary handwheel, and the selectable positions are angularly offset positions.

9. Container according to Claim 1, **characterized in that** said successive pressure measurements (P₁...Pₙ) are repeated at a given frequency (F) over a period of time (dt) of several days, several weeks, several months or several years.

10. Container according to Claim 1, **characterized in that** said successive pressure measurements (P₁...Pₙ) are repeated at a given frequency (F) without interruption, regardless of whether or not the container is in use.

11. Use of a fluid container (1) according to one of the preceding claims, to store or to supply a pressurized gas, in particular a medical gas chosen from oxygen or a gaseous mixture of N₂O/O₂, NO/N₂, He/O₂, or medical air.

12. Use according to Claim 11, **characterized in that** the pressurized gas is oxygen.
